# EUROPEAN PATENT SPECIFICATION

(11) **EP 3 205 673 B1**
(45) Date of publication and mention of the grant of the patent: **23.05.2018**
(21) Application number: 16155483.7
(22) Date of filing: 12.02.2016
(51) Int. Cl.: C08B 31/18, C09J 103/10, C08L 3/10

(54) **OXIDATION OF STARCH**
OXIDATION VON STÄRKE
OXYDATION D'AMIDON

(43) Date of publication of application: 16.08.2017
(73) Proprietor: Coöperatie Avebe U.A., 9641 GK Veendam (NL)
(72) Inventor: Vrieling-Smit, Annet, 9641 GK Veendam (NL); Wielema, Thomas Albert, 9641 GK Veendam (NL); Beugeling, John, 9641 GK Veendam (NL)
(74) Representative: V.O.

(56) References cited:
- WO-A1-00/06607
- WO-A1-00/15670
- WO-A1-2010/139727

## Description

The invention relates to oxidized starch, to a method of preparing oxidized starch and to the use of the oxidized starch in various applications.

Oxidized starches have been known for a long time. The oxidation of starch is usually carried out in order to reduce the viscosity of the starch in solution or dispersion. During the oxidation reaction, starch molecules are broken down, yielding molecules having a decreased molecular weight. The preparation of oxidized starches is conventionally carried out by oxidation with an alkali metal hypochlorite, which is a relatively cheap oxidizing agent, or with peroxide.

Oxidized starches find many applications in industry. Examples of common applications include the use of oxidized starch in the paper industry, for instance in coatings or surface sizing, the adhesive industry, the textile industry, and the food industry. When used in the paper industry, properties that are greatly influenced by the oxidized starch in coatings or surface sizing include tensile strength and burst strength of the paper, bending stiffness, porosity and dry pick.

Picking of paper is commonly defined as the damage of the paper surface during a printing operation. When the printing forme is lifted off the paper, the ink is exerting a certain force on the paper. This force increases with an increase in the viscosity and tack of the ink as well as the printing speed. When this force exceeds a certain value, the surface of the paper will be damaged. The value where damage occurs, is called the dry pick of the paper. Determination of the pick velocity and the pick resistance is one of the most widely used tests performed to measure the quality of paper.

The present invention seeks to provide an oxidized starch and a process of preparing oxidized starch that can be used in papermaking and exerts excellent properties to the paper. It is particularly desired that an improved dry pick of the paper is attained, while not or hardly affecting the other properties of the paper. It is further desired that the process of preparing the oxidized starch is efficient and economical in terms of the use of resources such as starting materials, reagents and energy.

Surprisingly, it has been found that these goals can be achieved by a process for the oxidation of starch comprising the steps of:
- providing a first starch comprising at least 95 wt.% of amylopectin, based on dry substance of the starch;
- providing a second starch comprising from 65 to 85 wt.% of amylopectin, based on dry substance of the starch; and
- subjecting the first and second starches to an oxidation treatment,
wherein the first and second starches are blended before or after they are subjected to an oxidation treatment.

Using a blend of oxidized starches that can be obtained by a process according to the invention, a paper can be obtained that has a better dry pick than when either a regular starch or an amylopectin starch alone is used, wherein a regular starch comprises an amount of from 65 to 85 wt.% of amylopectin based on dry substance of the starch and an amylopectin starch comprises at least 95 wt.% of amylopectin based on dry substance of the starch.

Most starch types consist of granules in which two types of glucose polymers are present. These are amylose (15-35 wt.% on dry substance) and amylopectin (65-85 wt.% on dry substance). Amylose consists of unbranched or slightly branched molecules having an average degree of polymerization of 1000 to 5000, depending on the starch type. Amylopectin consists of very large, highly branched molecules having an average degree of polymerization of 1,000,000 or more. The commercially most important starch types (maize starch, potato starch, wheat starch and tapioca starch) contain 15 to 30 wt.% amylose.

Of some cereal types, such as barley, maize, millet, wheat, milo, rice and sorghum, there are varieties of which the starch granules nearly completely consist of amylopectin. Calculated as weight percent on dry substance, these starch granules contain more than 95%, and usually more than 98% amylopectin. The amylose content of these cereal starch granules is thus less than 5%, and usually less than 2%. The above cereal varieties are also referred to as waxy cereal grains, and the amylopectin starch granules isolated therefrom as waxy cereal starches.

In contrast to the situation of different cereals, root and tuber varieties of which the starch granules nearly exclusively consist of amylopectin are not known in nature. For instance, potato starch granules isolated from potato tubers usually contain about 20% amylose and 80% amylopectin (wt.% on dry substance). Using genetic modification or mutation, however, successful efforts have been made to cultivate potato plants which, in the potato tubers, form starch granules consisting for more than 95 wt.% (on dry substance) of amylopectin. It has even been found feasible to produce potato tubers comprising substantially only amylopectin. It has also been found possible to cultivate and breed other types of roots and tubers, for instance yam, or cassava, of which the starch granules contain little or no amylose. As referred to herein, amylopectin starch is the starch isolated from potato tubers and having an amylopectin content of at least 95 wt.% based on dry substance. Amylopectin starch is also referred to as waxy starch.

Regarding production possibilities and properties, there are significant differences between potato starch on the one hand, and cereal starches on the other hand. This particularly applies to waxy maize starch, which is commercially by far the most important waxy cereal starch. The cultivation of waxy maize, suitable for the production of waxy maize starch is not commercially feasible in countries having a cold or temperate climate, such as The Netherlands, Belgium, England, Germany, Poland, Sweden and Denmark. The climate in these countries, however, is suitable for the cultivation of potatoes. Tapioca starch, obtained from cassava, may be produced in countries having a warm climate, such as is found in regions of South East Asia and South America.

The composition and properties of root and tuber starch, such as potato starch and tapioca starch, differ from those of the waxy cereal starches. Potato starch has a much lower content of lipids and proteins than the waxy cereal starches. Problems regarding odor and foaming, which, because of the lipids and/or proteins, may occur when using cereal or waxy cereal starch products (native and modified), do not occur, or occur to a much lesser degree when using corresponding potato starch products. In contrast to the waxy cereal starches, potato starch contains chemically bound phosphate groups. As a result, potato starch products in a dissolved state have a distinct polyelectrolyte character.

According to the present invention, the starch to be oxidized is a root or tuber starch. It has been found that the presence of the lipids and proteins adversely affects the oxidation reaction, leading to by-products because of which the oxidized starch is not of sufficient quality. Furthermore, the presence of lipids and proteins leads to an unacceptably high AOX level, wherein the AOX level is defined as the amount of material that adsorbs to active carbon when the oxidized starch is brought into contact with said active carbon. The AOX level provides an indication of the amount of halogenic material, such as chlorine, in the oxidized starch.

The oxidation of potato starch and tapioca starch has been found to lead to particularly advantageous oxidized starches.

In accordance with the invention, a blend of oxidized starches is produced wherein the blend comprises a regular starch and an amylopectin starch. The regular starch comprises from 65 to 85 wt.%, preferably from 70 to 83 wt.%, more preferably from 75 to 80 wt.% of amylopectin, based on dry substance of the starch. The amylopectin starch comprises at least 95 wt.%, preferably at least 98 wt.%, more preferably at least 99 wt.% of amylopectin, based on dry substance of the starch.

In accordance with the invention, it is also possible to subject starch derivatives to oxidation. Either the regular starch, the amylopectin starch or both may be starch derivatives. Suitable derivatives are obtainable by crosslinking, etherification, or esterification of the starch, or a combination of two or more of said modifications. These modifications may be performed in any known manner. Examples of suitable manners for obtaining the desired derivatives are for instance disclosed in "Modified Starches: Properties and Uses", O.B. Wurzburg, CRC Press Inc., 1987.

Within these classes of derivatives, particularly preferred derivatives to be oxidized are cationic, anionic and amphoteric starches. For the introduction of a cationic group, preferably a 2-hydroxypropyltrialkyl ammonium group is introduced on the starch. The alkyl chains of this quaternary ammonium compound may vary from 1 to 20 carbon atoms. For example, 1-chloro-2-hydroxypropyltrimethyl ammonium salt, glycidyltrimethyl ammonium salt, 1-chloro-2-hydroxypropyldimethylallyl ammonium salt or 1-chloro-2-hydroxypropylmethyldiallyl ammonium salt can be applied as cationization agent. Anionic substituents can be attached to the starch via an ether linkage. This may be achieved by reaction with for example chloroacetic acid of chloroacetic acid salts. Amphoteric derivatives may comprise any combination of the above cationic and anionic groups.

The regular starch and the amylopectin starch can be blended either before oxidation or after oxidation. In the first embodiment, the starches are blended and together subjected to the same oxidation conditions. In the second embodiment, the starches are first oxidized separately and then blended which allows the use of different oxidation conditions for both starches. It is preferred that also in this second embodiment the starches are subjected to the same oxidation conditions.

The amylopectin starch and regular starch or, in other words, the first and second starches, are preferably blended in a ratio of between 1:3 and 3:1, more preferably of between 1:2 and 1:1.

In a first preferred embodiment, the oxidation is carried out using hypochlorite as described in WO 00/006607. In this embodiment, the oxidation is carried out with an alkali metal hypochlorite as oxidizing agent. Preferably, sodium hypochlorite is used as an oxidizing agent. Alkali metal hypochlorites are relatively cheap and have a relatively large oxidizing power, thus leading to a very efficient and fast oxidizing process.

The amount in which the oxidizing agent is added may vary between 0.001 and 0.4 moles of alkali metal hypochlorite per mole starch, preferably between 0.0025 and 0.15 moles of alkali metal hypochlorite per mole starch. The skilled person will be aware that the alkali metal hypochlorite should be added to the starch in a controlled manner.

In a preferred embodiment, the oxidation of starch is performed at pH between 6 and 10, more preferably between 6.5 and 9.5, even more preferably between 7.5 and 9. It has been found that by working at a pH in these ranges particularly small amounts of oxidizing agent suffice in order to obtain an oxidized starch having excellent properties.

In order to maintain the pH at a desired value, it may be necessary to add an acid or a base to the reaction mixture. For this purpose, suitable acids and bases may be chosen such that they have substantially no negative effect on the oxidation reaction or on the oxidized starch. Preferably, hydrochloric acid or sodium hydroxide is used.

The temperature at which the starch, in accordance with the invention, is treated with an oxidizing agent is preferably chosen between 20 and 50°C, more preferably between 25 and 40°C.

The oxidation reaction may be carried out as a suspension or solution reaction in water. Preferably, the reaction is carried out as a suspension reaction in water, as this leads to a granular oxidized starch. To this end, the starch to be oxidized is suspended in water in an amount ranging between 0.5 and 1.5 kg of dry starch per liter water.

Optionally, a catalyst or a combination of catalysts may be used in the oxidation reaction. Suitable catalysts include bromide, cobalt, iron, manganese and copper salts. The catalyst or catalysts will be applied in catalytic amounts, which will be no higher than 10 wt.%, with respect to the amount of alkali metal hypochlorite.

Preferably, the reaction product of the above-described oxidation reaction is subjected to an alkaline treatment. This treatment comprises keeping the product for at least 15 minutes at a temperature of 20-50°C and a pH higher than 10. The alkaline treatment has a beneficial effect on the properties, especially the viscosity stability, of the oxidized starch. An oxidized starch according to the invention may be stored at increased temperatures, e.g. 80°C, for prolonged periods of time without substantially any change in the viscosity of the product being observed.

Preferably, the alkaline treatment lasts at least 30, more preferably at least 60 minutes. Although there is no critical upper limit for the duration of the alkaline treatment, it will usually not be carried out for more than 6 hours in order to prevent that too much of the desired product dissolves in the water. The pH at which the alkaline treatment is carried out is preferably higher than 10.5. Further preferred is that the pH is kept below 12. It has been found that according to these preferred embodiments, an even higher viscosity stability may be achieved.

In a second preferred embodiment, the oxidation is carried out using hydrogen peroxide as described in US 5,833,755. In this embodiment, the amount of hydrogen peroxide employed is preferably from about 0.0075 to 15.0 wt.%, more preferably about 0.01 to 2.0 wt.%, and even more preferably about 0.25 to 1.5 wt.% anhydrous hydrogen peroxide on dry substance of the starch. The hydrogen peroxide will normally be used in the form of an aqueous solution, as commonly supplied in commerce.

Preferably, the oxidation reaction is performed in a solution, dispersion or suspension of the starch in water, to which the hydrogen peroxide, or an aqueous solution thereof, is added. Preferably, the hydrogen peroxide is added batchwise or dropwise.

Suitable concentrations of the starch in said solution, dispersion or suspension lie between 10 and 50, preferably between 20 and 40 wt.%, based on the weight of the solution, dispersion or suspension. The pH during the oxidation reaction will preferably around neutral and lie between pH 10 and 12.5, preferably between 11 and 12. When the desired degree of oxidation is achieved, the pH will be adjusted to a level of pH 5-6. The temperature during the oxidation reaction in a suspension will preferably be below 60°C, more preferably between 20 and 50°C. When the reaction is carried out in a solution or dispersion, the temperature will usually be chosen between 60 and 200°C, preferably between 100 and 160°C. In order to carry out the reaction at a temperature higher than 100°C, use is preferably made of a jet cooker.

In accordance with the present invention, the oxidation of the specific starch described above is preferably performed in the presence of a catalyst. The catalyst preferably comprises divalent copper ions or a manganese complex. The use of a manganese complex as catalyst is particularly preferred.

In case the catalyst comprises divalent copper ions, it will preferably be used in the form of a salt. In principle, any copper(II)-salt which is soluble in water may be used. Suitably, the anion of the salt may be chosen from the group of chloride, sulfate, phosphate, nitrate, acetate, bromide and combinations thereof. Preferably, the quantity of copper used ranges from about 5 ppb to about 5000 ppb, more preferably from about 100 to about 1000 ppb, on dry substance of starch. When the oxidation reaction is carried out in a solution or a dispersion, the quantity of copper may be lower (e.g. between 5 and 1000 ppb) than when the reaction is performed in a suspension. In a preferred embodiment, the action of the divalent copper ions is enhanced by calcium, vanadium, manganese, iron and/or tungsten ions. The counterions for these ions may be of the same type as those of the copper catalyst. These additional salts will preferably be used in an amount between about 100 and about 2000 ppm, on dry substance of starch.

In case the catalyst comprises a manganese complex, the oxidation may also be carried out as disclosed in US 2012/0070554. In this embodiment, oxidation is carried out in the presence of a homogeneous manganese-based complex coordination catalyst. The homogeneous manganese-based complex coordination catalyst is typically a mononuclear or dinuclear complex of a Mn(III) or Mn(IV) transition metal. It will usually contain at least one organic ligand containing at least three nitrogen atoms that coordinate with the manganese, for example 1,4,7-triazacyclononane (TACN), 1,4,7-trimethyl-1,4,7-triazacyclononane (Me-TACN), 1,5,9-triazacyclododecane, 1,5,9-trimethyl-1,5,9-triazacyclododecane (Me-TACD), 2-methyl-1,4,7-triazacyclononane (Me/TACN), 2-methyl-1,4,7-trimethyl-1,4,7-triazacyclononane (Me/Me-TACN), N,N',N"-(2-hyroxyethyl) 1,4,7-triazacyclononane. In a preferred embodiment, the ratio of the manganese atoms to the nitrogen atoms is 1:3.

A suitable catalyst may also contain from 0 to 6 coordinating or bridging groups per manganese atom. When the homogeneous manganese based complex coordination catalyst is a mononuclear complex, coordinating groups are for example selected from -OMe, -O-CH₂-CH₃, or -O-CH₂-CH₂-CH3. When the homogeneous based complex coordination catalyst is a dinuclear complex, bridging groups may be selected, among others, from -O-, -O-O-, or -O-CH(Me)-O-. The manganese catalyst may also contain one or more monovalent or multivalent counterions leading to a charge neutrality. The number of such monovalent or multivalent counterions will depend on the charge of the manganese complex which can be 0 or positive. The type of the counterions needed for the charge neutrality of the complex is not critical and the counterions may be selected for example from halides such as chlorides, bromides and iodides, pseudohalides, sulphates, nitrates, methylsulfates, phosphates, acetates, perchlorates, hexafluorophosphates, or tetrafluoro-borates.

A particularly preferred catalyst is compound (I), dimanganese(IV)-tris(mu-oxo)-di(1,4,7-trimethyl-1,4,7-triazacyclononane)-bis(acetate) or [(Me-TACN)₂Mn^{IV}₂(µ-O)3](CH₃COO)₂, known as Dragon's blood or Dragon A350.

The manganese catalyst may be present in a total amount of from 10 to 1,000 ppm based on the weight of the starch, preferably from 20 to 500 ppm, more preferably from 30 to 200 ppm.

The invention further relates to a blend of oxidized starches obtainable by a process as above, and to the use of said blend of oxidized starches in the paper, adhesive, textile and food industries.

In the paper industry, oxidized starches have been used as coating binders since 1903. The main purpose of coating paper is to improve its printability. The most important components of a coating (also referred to as coating color) are pigments, such as titanium oxide, calcium carbonate, clays, and the like, binders, such as lattices, starches, PVOH, proteins, and the like, and water. The present oxidized starches have been found to have excellent properties, such as a good viscosity stability when in solution or dispersion. This makes them highly suitable for use as a binder in the surface treatment of paper and board, as barrier coating of paper and board and as binder in paper coatings.

In another application, the present blend of oxidized starches, particularly when prepared from a cationic starch derivative, may be used as an emulsifying agent for, or during production of, alkyl ketene dimers, alkyl succinic anhydride or alkyl isocyanates (analogous to what has been described in e.g. WO-A-96/31650, EP-A-0 824 161 and EP-A-0 369 328).

In addition, it has been found that the present blend of oxidized starches is highly suitable for replacing high viscous hydrocolloids, such as polyvinyl alcohol, guar, alginate, carboxymethylcellulose or hydroxyethylcellulose.

Yet another application wherein the present blend oxidized starches has been found to be highly suitable is in adhesives. It may be used to adhere two or more layers of paper together to form a multi-layer paper or (card)board. Also, aluminum foil can suitably be adhered onto paper by use of an oxidized starch according to the invention. Further, the present blend of oxidized starches may be used as a component in paper sack adhesives and wall paper adhesives, leading to an adhesive providing improved binding strength. In addition, paper and tape may be gummed with the present oxidized starch to produce stamps or envelopes. In abrasive paper or abrasive linen, the present oxidized starch may be used to adhere abrasive particles, such as sand, onto the paper or linen. In addition, the present oxidized starch may be used as an adhesive for seeds or fertilizers.

Still another application is related to the stabilization of emulsions, in particular of emulsions used in the adhesive industry such as polyvinylacetate emulsions. A blend of oxidized starches according to the invention may be used as a protective colloid for providing the desired stability.

In the textile industry, the present blend of oxidized starches may be used to improve the weaving operation or weaving efficiency by warp yarn sizing. This results in an improved abrasion resistance of the warp yarns during the weaving process and less warp-end breakages. The present oxidized starch may further be applied as finishing agent to give a smooth and firm hand to fabrics. It may also be used for the coating of glass fibers (fabrics and non-wovens). In addition, it may be used as blanket adhesive in the textile printing industry.

In the food industry, Arabic gum may be replaced in e.g. confectioneries by an oxidized starch according to the invention. Also, the present product has been found to be highly suitable as a thickener in various food products, such as sauces. The excellent stability of the present blend of oxidized starches, leads in these applications to a more clear food product.

It will be clear to the skilled person that the above list of applications is not intended to be extensive and that many more applications of the present blends of oxidized starches are conceivable. In practice, the present product may be used in any application in which oxidized starches have conventionally been used.

The invention will now be elucidated by the following non-restrictive examples.

### Example 1

1.0 kg of regular potato starch (0.82 kg dry matter, food grade potato starch from AVEBE, amylopectin content 81 wt.% based on dry substance of starch) was suspended in 1.0 kg of water. The temperature of the suspension was increased to 35°C. The pH was set at 9.0 by the addition of a 4.4 wt.% sodium hydroxide solution. 108.6 ml of a sodium hypochlorite solution containing 179.5 g/liter of active chlorine was added. During the oxidation the pH was maintained at 9.0 by the addition of a 4.4 wt.% sodium hydroxide solution. Once the reaction was complete, i.e. no chlorine was detectable with potassium iodide-starch paper, the pH was increased to 10.5 by the addition of a 4.4 wt.% sodium hydroxide solution. After one hour of alkaline post-treatment 5 ml sodium hypochlorite solution was added for decoloration. The reaction mixture was neutralized to pH 5.5 by the addition of 10 N H₂SO₄, whereupon the product was dewatered and washed before drying.

### Example 2

1.0 kg of amylopectin potato starch (0.82 kg dry matter, Eliane® potato starch from AVEBE; amylopectin content >98 wt.% based on dry substance of starch) was suspended in 1.0 kg of water. The temperature of the suspension was increased to 35°C. The pH was set at 9.0 by the addition of a 4.4 wt.% sodium hydroxide solution. 64.0 ml of a sodium hypochlorite solution containing 179.5 g/liter of active chlorine was added. During the oxidation the pH was maintained at 9.0 by the addition of a 4.4 wt.% sodium hydroxide solution. Once the reaction was complete, i.e. no chlorine was detectable with potassium iodide-starch paper, the pH was increased to 10.5 by the addition of a 4.4 wt.% sodium hydroxide solution. After one hour of alkaline post-treatment 5 ml sodium hypochlorite solution was added for decoloration. The reaction mixture was neutralized to pH 5.5 by the addition of 10 N H₂SO₄, whereupon the product was dewatered and washed before drying.

### Example 3

A blend of 0.5 kg of regular potato starch (0.41 kg dry matter, food grade potato starch from AVEBE; amylopectin content 81 wt.% based on dry substance of starch) and 0.5 kg amylopectin potato starch (0.41 kg dry matter, Eliane® potato starch from AVEBE; amylopectin content >98 wt.% based on dry substance of starch) was suspended in 1.0 kg of water. The temperature of the suspension was increased to 35°C. The pH was set at 9.0 by the addition of a 4.4 wt.% sodium hydroxide solution. 84.6 ml of a sodium hypochlorite solution containing 179.5 g/liter of active chlorine was added. During the oxidation the pH was maintained at 9.0 by the addition of a 4.4 wt.% sodium hydroxide solution. Once the reaction was complete, i.e. no chlorine was detectable with potassium iodide-starch paper, the pH was increased to 10.5 by the addition of a 4.4 wt.% sodium hydroxide solution. After one hour of alkaline post-treatment 5 ml sodium hypochlorite solution was added for decoloration. The reaction mixture was neutralized to pH 5.5 by the addition of 10 N H₂SO₄, whereupon the product was dewatered and washed before drying.

### Example 4

0.5 kg of product prepared according to example 1 was homogeneous mixed with 0.5 kg of product prepared according to example 2 in the dry state by intensive mixing for 10 minutes.

### Example 5

The oxidized starch derivatives from the examples 1, 2, 3 and 4 were dissolved in 25% (dry matter) on a boiling water bath with high speed stirring (600-1200 rpm). After 30 minutes the solutions were stored at 50°C and the viscosity was measured after 0, 1, 2, and 4 hours (Brookfield LVF, 60 rpm). The results of the different oxidized starches is shown in table 1.

| **Table 1** | Viscosity 25 %; 50 °C (mPa.s) | | | |
|---|---|---|---|---|
| Time (h) | Example 1 | Example 2 | Example 3 | Example 4 |
| 0 | 433 | 230 | 201 | 276 |
| 1 | >10000 | 233 | 231 | 295 |
| 2 | >10000 | 228 | 248 | 273 |
| 4 | >10000 | 255 | 260 | 280 |

Both the example 3 (pre-blended) and the example 4 (post-blending) exhibit excellent viscosity stability in solution.

### Example 6

1.0 kg of regular potato starch (0.82 kg dry matter, food grade potato starch from AVEBE; amylopectin content 81 wt.% based on dry substance of starch) was suspended in 1.0 kg of water. The temperature of the suspension was increased to 30°C. The pH was set at 11.3 by the addition of a 4.4 wt.% sodium hydroxide solution. 80 ppm (based on starch) of the Mn catalyst (Interox Cat. D350) was added followed by 25.4 ml of a hydrogen peroxide solution containing 30% hydrogen peroxide. During the oxidation the pH was maintained at 11.3 by the addition of a 4.4 wt.% sodium hydroxide solution. Once the reaction was complete, i.e. no peroxide was detectable with potassium iodide-starch paper, the reaction mixture was neutralized to pH 5.5 by the addition of 10 N H₂SO₄, whereupon the product was dewatered and washed before drying.

### Example 7

A blend of 0.5 kg of regular potato starch (0.41 kg dry matter, food grade potato starch from AVEBE; amylopectin content 81 wt.% based on dry substance of starch) and 0.5 kg amylopectin potato starch (0.41 kg dry matter, Eliane® potato starch from AVEBE; amylopectin content >98 wt.% based on dry substance of starch) was suspended in 1.0 kg of water. The temperature of the suspension was increased to 30°C. The pH was set at 11.3 by the addition of a 4.4 wt.% sodium hydroxide solution. 80 ppm (based on starch) of the Mn catalyst (Interox Cat. D350) was added followed by 25.4 ml of a hydrogen peroxide solution containing 30% hydrogen peroxide. During the oxidation the pH was maintained at 11.3 by the addition of a 4.4 wt.% sodium hydroxide solution. Once the reaction was complete, i.e. no peroxide was detectable with potassium iodide-starch paper, the reaction mixture was neutralized to pH 5.5 by the addition of 10 N H₂SO₄, whereupon the product was dewatered and washed before drying.

### Example 8

The oxidized starch derivatives from the examples 6 and 7 were dissolved in 35% (dry matter) on a boiling water bath with high speed stirring (600-1200 rpm). After 30 minutes the solutions were stored at 50°C and the viscosity was measured after 0, 1, 2, and 4 hours (Brookfield LVF, 60 rpm). The results of the different oxidized starches is shown in table 2.

| **Table 2** | Viscosity 35 %; 50 °C (mPa.s) | |
|---|---|---|
| Time (h) | Example 6 | Example 7 |
| 0 | 280 | 220 |
| 1 | 1520 | 260 |
| 2 | 6500 | 260 |
| 4 | >10000 | 280 |

The example 7 exhibits excellent viscosity stability in solution.

### Example 9

1.0 kg of amylopectin potato starch (0.82 kg dry matter, Eliane® potato starch from AVEBE; amylopectin content >98 wt.% based on dry substance of starch) was suspended in 1.0 kg of water. The temperature of the suspension was increased to 35°C. The pH was set at 9.0 by the addition of a 4.4 wt.% sodium hydroxide solution. 41.8 ml of a sodium hypochlorite solution containing 179.5 g/liter of active chlorine was added. During the oxidation the pH was maintained at 9.0 by the addition of a 4.4 wt.% sodium hydroxide solution. Once the reaction was complete, i.e. no chlorine was detectable with potassium iodide-starch paper, the pH was increased to 10.5 by the addition of a 4.4 wt.% sodium hydroxide solution. After one hour of alkaline post-treatment 5 ml sodium hypochlorite solution was added for decoloration. The reaction mixture was neutralized to pH 5.5 by the addition of 10 N H₂SO₄, whereupon the product was dewatered and washed before drying.

### Example 10

A blend of 0.5 kg of regular potato starch (0.41 kg dry matter, food grade potato starch from AVEBE; amylopectin content 81 wt.% based on dry substance of starch) and 0.5 kg amylopectin potato starch (0.41 kg dry matter, Eliane® potato starch from AVEBE; amylopectin content >98 wt.% based on dry substance of starch) was suspended in 1.0 kg of water. The temperature of the suspension was increased to 35°C. The pH was set at 9.0 by the addition of a 4.4 wt.% sodium hydroxide solution. 47.9 ml of a sodium hypochlorite solution containing 179.5 g/liter of active chlorine was added. During the oxidation the pH was maintained at 9.0 by the addition of a 4.4 wt.% sodium hydroxide solution. Once the reaction was complete, i.e. no chlorine was detectable with potassium iodide-starch paper, the pH was increased to 10.5 by the addition of a 4.4 wt.% sodium hydroxide solution. After one hour of alkaline post-treatment 5 ml sodium hypochlorite solution was added for decoloration. The reaction mixture was neutralized to pH 5.5 by the addition of 10 N H₂SO₄, whereupon the product was dewatered and washed before drying.

### Example 11

The oxidized starch derivatives from the examples 9 and 10 were dissolved in 25% (dry matter) on a boiling water bath with high speed stirring (600-1200 rpm). After 30 minutes solutions were prepared with the following concentrations 2.5%, 5%, and 7.5% for both starches. The Brookfield viscosity was measured as describe in Example 5. The starch solutions were applied onto 80 gsm base paper from Burgo Ardennes using a puddle type size press from the Dixon coater at a speed of 50 m/min. The paper was dried to a moisture content of 5%. Before paper testing the papers were conditioned at 23 °C and 50% relative humidity for at least three days.

The sheet weight was measured according to NEN-EN-ISO 536. Dry pick resistance was measured according to NEN-ISO-3783, using an IGT pick tester type AIC 2-5. The test is run with 8 µm oil thickness on 1 cm disks, using a middle viscous IGT oil at a speed of 5 m/s. The point where the pick resistance starts is multiplied with the viscosity of the oil (520) and expressed as WP (viscosity velocity product). The results of the different oxidized starches is shown in table 3.

| **Table 3** | Concentration | 0% | 2.5% | 5% | 7.5% |
|---|---|---|---|---|---|
| Example 9 | Viscosity | | 3.1 | 9.9 | 15.0 |
| Example 10 | Viscosity | | 2.9 | 9.8 | 16.7 |
| Example 9 | Sheet weight | 86.6 | 87.1 | 87.7 | 88.1 |
| Example 10 | Sheet weight | 86.6 | 86.9 | 87.8 | 88.2 |
| Example 9 | ICT pick | 800 | 810 | 820 | 860 |
| Example 10 | ICT pick | 800 | 930 | 950 | 950 |

### Example 12

A blend of 0.47 kg of regular tapioca starch (0.41 kg dry matter, lot 21204637 from Siam Quality Starch Co., Ltd.; amylopectin content 83 wt.% based on dry substance of starch) and 0.5 kg amylopectin potato starch (0.41 kg dry matter, Eliane® potato starch from AVEBE; amylopectin content >98 wt.% based on dry substance of starch) was suspended in 1.0 kg of water. The temperature of the suspension was increased to 35°C. The pH was set at 9.0 by the addition of a 4.4 wt.% sodium hydroxide solution. 59.9 ml of a sodium hypochlorite solution containing 179.5 g/liter of active chlorine was added. During the oxidation the pH was maintained at 9.0 by the addition of a 4.4 wt.% sodium hydroxide solution. Once the reaction was complete, i.e. no chlorine was detectable with potassium iodide-starch paper, the pH was increased to 10.5 by the addition of a 4.4 wt.% sodium hydroxide solution. After one hour of alkaline post-treatment 5 ml sodium hypochlorite solution was added for decoloration. The reaction mixture was neutralized to pH 5.5 by the addition of 10 N H₂SO₄, whereupon the product was dewatered and washed before drying.

### Example 13

A blend of 0.5 kg of regular potato starch (0.41 kg dry matter, food grade potato starch from AVEBE; amylopectin content 81 wt.% based on dry substance of starch) and 0.47 kg waxy maize starch (0.41 kg dry matter, Meritena 300 from Amylum; amylopectin content >95 wt.% based on dry substance of starch) was suspended in 1.0 kg of water. The temperature of the suspension was increased to 35°C. The pH was set at 9.0 by the addition of a 4.4 wt.% sodium hydroxide solution. 100.3 ml of a sodium hypochlorite solution containing 179.5 g/liter of active chlorine was added. During the oxidation the pH was maintained at 9.0 by the addition of a 4.4 wt.% sodium hydroxide solution. Once the reaction was complete, i.e. no chlorine was detectable with potassium iodide-starch paper, the pH was increased to 10.5 by the addition of a 4.4 wt.% sodium hydroxide solution. After one hour of alkaline post-treatment 5 ml sodium hypochlorite solution was added for decoloration. The reaction mixture was neutralized to pH 5.5 by the addition of 10 N H₂SO₄, whereupon the product was dewatered and washed before drying.

### Example 14

The oxidized starch derivatives from the examples 12 and 13 were dissolved in 25% (dry matter) on a boiling water bath with high speed stirring (600-1200 rpm). After 30 minutes the solutions were stored at 50°C and the viscosity was measured after 0, 1, 2, and 4 hours (Brookfield LVF, 60 rpm). The results of the different oxidized starches is shown in table 4.

| **Table 4** | Viscosity 25 %; 50 °C (mPa.s) | |
|---|---|---|
| Time (h) | Example 12 | Example 13 |
| 0 | 250 | 310 |
| 1 | 420 | 540 |
| 2 | 470 | 1700 |
| 4 | 580 | 3750 |

The blend of example 13 exhibits very poor viscosity stability in solution.

## Claims

1. A process for the oxidation of starch comprising the steps of:
- providing a first root or tuber starch comprising at least 95 wt.% of amylopectin, based on dry substance of the starch;
- providing a second root or tuber starch comprising from 65 to 85 wt.% of amylopectin, based on dry substance of the starch; and
- subjecting the first and second starches to an oxidation treatment,
wherein the first and second starches are blended before or after they are subjected to an oxidation treatment.

2. A process according to claim 1, wherein the oxidation treatment comprises treatment with an alkali metal hypochlorite at a pH between 6.5 and 8.5.

3. A process according to claim 2 followed by an alkaline treatment comprising keeping the product for at least 15 minutes at a temperature of 20-50°C and a pH higher than 10.

4. A process according to claim 1, wherein the oxidation treatment comprises treatment with hydrogen peroxide in the presence of a catalyst.

5. A process according to claim 4, wherein the catalyst comprises divalent copper ions or a manganese complex.

6. A process according to any of the preceding claims wherein the first and second starches are blended in a ratio of between 1:3 and 3:1, preferably of between 1:2 and 1:1.

7. A process according to any of the preceding claims, wherein the first and second starches are chosen from the group of potato and tapioca starches.

8. A process according to any of the preceding claims, wherein the first starch, the second starch or both the first and second starches are starch derivatives.

9. A process according to claim 8 wherein the derivatives are obtained by crosslinking, etherification, or esterification of the starch, or a combination of two or more of said modifications.

10. A blend of oxidized starches obtainable by a process according to any of the preceding claims.

11. Use of a blend of oxidized starches according to claim 10 as a binder in paper coatings or surface sizings, as an adhesive, a protective colloid for stabilizing emulsions, in warp yarn sizing, as a coating of glass fibers, as a blanket adhesive, in abrasive paper as an emulsifying agent, such as for an alkyl succinic anhydride, an alkyl ketene dimer or an alkyl isocyanate, or in food products.

## Patentansprüche

1. Verfahren zur Oxidation von Stärke, umfassend die Schritte von:
- Bereitstellen einer ersten Wurzel- oder Knollenstärke, umfassend mindestens 95 Gew.-% Amylopectin, basierend auf Trockensubstanz der Stärke;
- Bereitstellen einer zweiten Wurzel- oder Knollenstärke, umfassend von 65 bis 85 Gew.-% Amylopectin, basierend auf Trockensubstanz der Stärke; und
- Unterziehen der ersten und zweiten Stärken einer Oxidationsbehandlung,
wobei die ersten und zweiten Stärken gemischt werden, bevor oder nachdem sie einer Oxidationsbehandlung unterzogen werden.

2. Verfahren nach Anspruch 1, wobei die Oxidationsbehandlung Behandlung mit einem Alkalimetallhypochlorit bei einem pH zwischen 6,5 und 8,5 umfasst.

3. Verfahren nach Anspruch 2, gefolgt von einer Alkalibehandlung, umfassend Aufbewahren des Produkts für mindestens 15 Minuten bei einer Temperatur von 20-50°C und einem pH höher als 10.

4. Verfahren nach Anspruch 1, wobei die Oxidationsbehandlung Behandlung mit Wasserstoffperoxid in Gegenwart eines Katalysators umfasst.

5. Verfahren nach Anspruch 4, wobei der Katalysator divalente Kupferionen oder einen Mangankomplex umfasst.

6. Verfahren nach einem der vorhergehenden Ansprüche, wobei die ersten und zweiten Stärken in einem Verhältnis von zwischen 1:3 und 3:1, bevorzugt von zwischen 1:2 und 1:1, gemischt werden.

7. Verfahren nach einem der vorhergehenden Ansprüche, wobei die ersten und zweiten Stärken ausgewählt sind aus der Gruppe von Kartoffel- und Tapiokastärken.

8. Verfahren nach einem der vorhergehenden Ansprüche, wobei die erste Stärke, die zweite Stärke oder sowohl die erste als auch die zweite der Stärken Stärkederivate sind.

9. Verfahren nach Anspruch 8, wobei die Derivate durch Vernetzung, Verätherung oder Veresterung der Stärke oder einer Kombination von zwei oder mehreren der Modifikationen erhalten werden.

10. Mischung von oxidierten Stärken, erhalten durch ein Verfahren nach einem der vorhergehenden Ansprüche.

11. Verwendung eines Gemischs aus oxidierten Stärken nach Anspruch 10 als ein Bindemittel in Papierbeschichtungen oder Oberflächenleimungen als ein Klebstoff, ein Schutzkolloid zur Stabilisierung von Emulsionen, in Kettgarnleimung, als eine Beschichtung von Glasfasern, als ein Drucktuchkleber, in Schmirgelpapier als ein Emulgiermittel, wie etwa für ein Alkylbernsteinsäureanhydrid, ein Alkylketendimer oder ein Alkylisocyanat, oder in Nahrungsmittelprodukten.

## Revendications

1. Procédé pour l'oxydation d'amidon comprenant les étapes de :
- fourniture d'un premier amidon de racine ou de tubercule comprenant au moins 95 % en poids d'amylopectine, en se basant sur la substance sèche de l'amidon ;
- fourniture d'un second amidon de racine ou de tubercule comprenant de 65 à 85 % en poids d'amylopectine, en se basant sur la substance sèche de l'amidon ; et
- soumission des premier et second amidons à un traitement d'oxydation,
dans lequel les premier et second amidons sont mélangés avant ou après leur soumission à un traitement d'oxydation.

2. Procédé selon la revendication 1, dans lequel le traitement d'oxydation comprend un traitement avec un hypochlorite de métal alcalin à un pH situé entre 6,5 et 8,5.

3. Procédé selon la revendication 2 suivi d'un traitement alcalin comprenant le maintien du produit pendant au moins 15 minutes à une température de 20 à 50 °C et un pH supérieur à 10.

4. Procédé selon la revendication 1, dans lequel le traitement d'oxydation comprend un traitement avec du peroxyde d'hydrogène en présence d'un catalyseur.

5. Procédé selon la revendication 4, dans lequel le catalyseur comprend des ions de cuivre bivalents ou un complexe de manganèse.

6. Procédé selon l'une quelconque des revendications précédentes dans lequel les premier et second amidons sont mélangés dans un rapport situé entre 1:3 et 3:1, de préférence entre 1:2 et 1:1.

7. Procédé selon l'une quelconque des revendications précédentes, dans lequel les premier et second amidons sont choisis dans le groupe des amidons de pomme de terre et de tapioca.

8. Procédé selon l'une quelconque des revendications précédentes, dans lequel le premier amidon, le second amidon ou à la fois les premier et second amidons sont des dérivés d'amidon.

9. Procédé selon la revendication 8 dans lequel les dérivés sont obtenus par réticulation, éthérification, ou estérification de l'amidon, ou une combinaison de deux ou plus desdites modifications.

10. Mélange d'amidons oxydés pouvant être obtenu par un procédé selon l'une quelconque des revendications précédentes.

11. Utilisation d'un mélange d'amidons oxydés selon la revendication 10 en tant que liant dans des couchages de papier ou des encollages de surface, en tant qu'adhésif, colloïde protecteur pour la stabilisation d'émulsions, dans l'encollage de fil de chaîne, en tant que revêtement de fibres de verre, en tant qu'adhésif de blanchet, dans du papier abrasif en tant qu'agent émulsifiant, comme pour un anhydride alkyl-succinique, un dimère d'alkyl-cétène ou un isocyanate d'alkyle, ou dans des produits alimentaires.
